# EUROPÄISCHE PATENTSCHRIFT

(11) **EP 4 010 969 B1**
(45) Veröffentlichungstag und Bekanntmachung des Hinweises auf die Patenterteilung: **09.10.2024**
(21) Anmeldenummer: 20757516.8
(22) Anmeldetag: 07.08.2020
(51) Int. Cl.: H02K 16/02, H02K 7/116, H02K 1/14

(54) **VERKOPPELTES MASCHINENSYSTEM**
COUPLED MACHINE SYSTEM
SYSTÈME DE MACHINES ACCOUPLÉES

(30) Priorität: 09.08.2019 AT 507082019
(43) Veröffentlichungstag der Anmeldung: 15.06.2022
(73) Patentinhaber: TECHNISCHE UNIVERSITÄT WIEN, 1040 Wien (AT)
(72) Erfinder: SCHRÖDL, Manfred, 7223 Sieggraben (AT)
(74) Vertreter: SONN Patentanwälte GmbH & Co KG
(86) Internationale Anmeldenummer: PCT/AT2020/060292
(87) Internationale Veröffentlichungsnummer: WO 2021/026577

(56) Entgegenhaltungen:
- EP-A1- 2 733 832
- EP-A2- 2 209 188
- WO-A1-2018/006109
- WO-A2-2014/169308
- GB-A- 2 491 365
- US-A- 2 782 328
- US-A- 4 528 483
- US-A- 5 780 950

## Beschreibung

Die Erfindung betrifft ein elektrisches Maschinensystem mit einer geradzahligen, vorzugsweise durch vier teilbaren, Anzahl mechanisch und elektromagnetisch verkoppelter und Drehfelder erzeugender Teilmaschinen, die gemeinsame magnetische Abschnitte und gemeinsame Spulen aufweisen, wobei jede Teilmaschine mit zwei benachbarten Teilmaschinen elektromagnetisch verkoppelt ist. D.h. jede Teilmaschine ist mit mindestens zwei oder einer höheren geraden Anzahl von benachbarten Teilmaschinen, vorzugsweise mit genau zwei benachbarten Teilmaschinen, elektromagnetisch verkoppelt. Die Teilmaschinen sind mechanisch über ein Getriebe verkoppelt.

Die Teilmaschinen können beispielsweise über mechanische Getriebe verbunden sein. Elektrische Antriebe mit Getriebestufen werden häufig mit einer elektrischen Maschine, wie einer Permanentmagnet- oder elektrisch erregten Synchronmaschine, Asynchronmaschine, Reluktanzmaschine und dergleichen ausgeführt, an deren Ausgangswelle ein ein- oder mehrstufiges Getriebe mechanisch angeschlossen ist.

Als Drehfeld wird in der Elektrotechnik insbesondere ein Magnetfeld bezeichnet, das sich fortlaufend um eine Rotationsachse dreht. Bei Drehfelder erzeugenden Maschinen oder Teilmaschinen (kurz Drehfeldmaschinen) ändern insbesondere die physikalischen Größen Strom, Spannung und Flussverkettung im Betrieb regelmäßig ihr Vorzeichen. Beispielsweise ändern sich im Betrieb bei konstanter Drehzahl die physikalischen Größen Strom, Spannung und Flussverkettung mehr oder weniger sinusförmig. Drehfeldmaschinen arbeiten insbesondere mit zumindest zwei Phasen.

Aus WO 2004/047256 A1 ist ein Generator mit Mehrfachausgang bekannt, wobei im Inneren des Gehäuses mehrere Generatoreinheiten um eine Hauptwelle herum angebracht sind. Ein eintreibendes Getrieberad treibt dabei mehrere Rotoren an, die in die gleiche Richtung rotieren. Dies hat gegenüber der vorliegenden Offenbarung den Nachteil, dass jeder Rotor einen voll ausgebildeten Stator benötigt. Die Teilmaschinen sind nicht elektromagnetisch verkoppelt. Es können daher keine materialreduzierenden geometrischen Vereinfachungen im Statoraufbau vorgenommen werden.

Ein weiteres Maschinensystem ohne elektromagnetische Verkopplung der Teilmaschinen ist in DE 10 2009 010 162 A1 gezeigt.

Weiters sind in der DE 10 2013 213 847 A1 bzw. der entsprechenden WO 2015/007441 A2 Anordnungen von mehreren elektrischen Maschinen geoffenbart, die mit einem nachgeschalteten Getriebe verbunden sind. Benachbarte Teilmaschinen, d.h. die elektromagnetisch verkoppelt sind, sind dabei entweder ausschließlich mit entgegengesetzten Drehrichtungen offenbart oder es handelt sich um Anordnungen mit einer ungeraden Anzahl von Teilmaschinen, was einen entsprechend hohen konstruktiven Aufwand erfordert.

Aus EP 0 721 248 A2 ist eine elektrische Antriebsvorrichtung mit mehreren permanentmagnetisch erregten Rotoren bekannt, denen jeweils drei Statorpole zugeordnet sind. Diese Antriebsvorrichtung ist für Trockenrasierapparate vorgesehen, wobei die Rotoren ohne gegenseitige mechanische Verbindung rotieren, wie dies in Rasierapparaten üblich ist. Dies hat den Nachteil, dass keine vorzugsweise drehmomenterhöhende mechanische Verkopplung vorhanden ist.

Eine weitere Anordnung mit zwei parallelen Rotoren und einen auf beide Rotoren wirkenden Magnetkreis ist in EP 0 678 966 A1 angegeben. In einem Beispiel weisen die beiden Rotoren verschiedene Polzahlen auf. Allerdings beschränkt sich diese Offenbarung auf Rotoren mit entgegengesetzter Drehrichtung.

Schließlich ist auch in DE 2006 386 C1 eine Multi-Rotor-Anordnung dargestellt, die mit einem Drehfeld eines gemeinsamen Ständersystems zusammenwirkt. Aufgrund der matrixartigen Anordnung ist kein wirtschaftlich aufgebautes Getriebe zur Verbindung der Rotoren möglich und aufgrund der Zielanwendungen (Zentrifugen) auch keinerlei mechanische Verkopplung angestrebt oder offenbart.

Die WO 2018/006109 A1 zeigt ein gattungsgemäßes elektrisches Maschinensystem, bei dem allerdings benachbarte Teilmaschinen immer in entgegengesetzte Drehrichtung arbeiten.

Die US 2 782 328 A zeigt zwar ein Maschinensystem mit vier Teilmaschinen, mit teilweise gleicher und teilweise entgegengesetzter Drehrichtung zwischen benachbarten Teilmaschinen, allerdings ist dabei jede Teilmaschine mit jeder der drei andere Teilmaschinen elektromagnetisch verkoppelt, d.h. nicht mit einer geraden Anzahl. Darüber hinaus erzeugen die Teilmaschinen keine Drehfelder, sondern pulsierende Momente analog zu einem Einphasenbetrieb. Die Felder pulsieren dabei in axiale Richtung zwischen zwei axialen Blocks der Rotoren. Im Einzelnen zeigt dieses Dokument ein Wicklungssystem, bei dem sämtliche Spulen gleich- oder gegenphasige magnetische Flussverläufe aufweisen bzw. von diesen durchflossen werden. Somit sind die induzierten Spannungen in allen Spulen entweder gleich- oder gegenphasig. Folglich liegt eine Einphasenanordnung vor, die kein Drehfeld bilden kann.

Die WO 2012/164052 A2 zeigt ein Maschinensystem mit benachbarten Rotoren, deren Drehrichtung gleichsinnig orientiert ist. Bei den Ausführungsbeispielen handelt es sich allerdings um "Switched Reluctance" Maschinen, die keine Drehfelder erzeugen. Bei diesen Maschinen ändern die Größen wie z.B. der Strangstrom ihr Vorzeichen nicht und es wird quasi ein Stromblock immer gleichen Vorzeichens eingeprägt. Dies bringt starke Drehmomentschwankungen mit sich.

Die US 5,780,950 A offenbart ein Maschinensystem mit mehreren axial angeordneten Rotoren an einem gemeinsamen Stator, deren Wellen mechanisch miteinander verbunden sein können. Gezeigt ist, dass alle Spulen mit Flussverläufen verkettet sind, die alle gleichzeitig ihren maximalen Betrag bzw. einen Nulldurchgang aufweisen. Somit liegt auch hier eine Charakteristik von Einphasenmaschinen mit schwankendem Drehmoment vor. Ein Drehfeld kann damit ebenfalls nicht erzeugt werden.

Die EP 2 209 188 A2 zeigt ein Maschinensystem mit in Paaren zusammengefassten Motoren bzw. Generatoren, die sich magnetische Abschnitte teilen. Es ist nicht gezeigt, dass jede Teilmaschine mit zwei benachbarten Teilmaschinen elektromagnetisch verkoppelt ist, sondern eben mit nur einer weiteren Maschine. Mit anderen Worten: In EP 2 209 188 A2 sind nur zwei benachbarte Teilmaschinen elektromagnetisch verkoppelt, d.h. paarweise. Die jeweils zwei verkoppelten Teilmaschinen erzeugen gemeinsam ein pulsierendes Magnetfeld, das in dem diesen beiden Teilmaschinen zugeordneten und mit dem erwähnten Magnetfeld verketteten Wicklungssystem eine einphasige Wechselspannung hervorruft. Das bedeutet, dass in allen Teilmaschinen Drehmomente mit starken Pulsationen hervorgerufen werden. Keine der dargestellten Teilmaschinen erzeugt ein Drehfeld.

Aus US 4,528,483 A ist ein Maschinensystem mit Rotoren bekannt, die sich in die gleiche Richtung drehen und die über einen Riemen miteinander verbunden sind.

EP 2 733 832 A1 offenbart eine Scheibenläufermaschine mit mehreren Scheiben, die auf einer gemeinsamen Welle angeordnet sind.

Aufgabe der Erfindung ist es, ein elektrisches Maschinensystem wie eingangs ausgeführt zu schaffen, bei dem einerseits die oben genannten Nachteile vermieden werden und das andererseits aufgrund einer neuen Maschinenstruktur mit einer großen Anzahl von geometrischen Freiheitsgraden besonders kompakt konstruiert sein kann.

Diese Aufgabe wird durch die Erfindung gelöst, die ein elektrisches Maschinensystem gemäß den beiliegenden Ansprüchen vorsieht. Demgemäß ist ein elektrisches Maschinensystem mit einer geradzahligen Anzahl mechanisch und elektromagnetisch verkoppelter und Drehfelder erzeugender Teilmaschinen vorgesehen, wobei die Teilmaschinen gemeinsame magnetische Abschnitte und gemeinsame Spulen aufweisen, wobei jede Teilmaschine mit zwei benachbarten Teilmaschinen elektromagnetisch verkoppelt ist, und wobei mindestens zwei benachbarte Teilmaschinen eine gleiche Drehrichtung aufweisen.

Die Erfindung sieht somit ein elektrisches Maschinensystem mit einer Anordnung von mehreren elektrisch und mechanisch verkoppelten Teilmaschinen vor. Die Teilmaschinen sind mechanisch über ein Getriebe verkoppelt. Die relative Drehrichtung der Teilmaschinen untereinander ist eine strukturelle Eigenschaft der mechanischen Verkopplung. Elektrisch können die Spulen, die auf den magnetisch leitenden Verbindungsschenkeln angeordnet sind, zu einem Drehstrom-Wicklungssystem beliebiger Strangzahl, vorzugsweise Strangzahl drei oder zwei, verschaltet sein. Dabei wird eine kompakte Konstruktion des aus den elektrischen Teilmaschinen bestehenden Maschinensystems ermöglicht, da aufgrund der geometrischen Anordnung gewisse Teile der Teilmaschine weggelassen werden können, weil sich magnetische Flussanteile von benachbarten Teilmaschinen stückweise kompensieren und damit magnetisch aktives Material eingespart bzw. erübrigt werden kann. Andererseits kann die mechanische Kopplung der Teilmaschinen vorteilhafterweise als mechanisches Planetengetriebe mit einem gewünschten Übersetzungsverhältnis ausgeführt werden, wodurch Komponenten des Planetengetriebes, wie Lagerung, Kupplungen und Gehäuseteile, gegenüber einem diskreten Aufbau aus elektrischer Maschine und funktionell getrenntem Planetengetriebe eingespart bzw. doppelt genutzt werden können. Außerdem weisen beim vorliegenden Maschinensystem die mit den Teilmaschinen verbundenen Planeten nur einen Kontakt auf der Zahnflanke auf, wodurch die Verluste gegenüber einem normalen Planetengetriebe deutlich reduziert werden können.

Weiters können die elektrischen Teilmaschinen unabhängig von der mechanischen Fertigungstoleranz die Teilmomente bzw. -kräfte, die sie entwickeln, z.B. auf ein dem Teilmotor durch direkte mechanische Verbindung zugeordnetes Planetenrad übertragen.

Demgemäß entfällt das Aufsplitten eines einzelnen Wellendrehmoments der elektrischen Maschine über ein Zahnrad auf Planeten; das Drehmoment wird vielmehr direkt durch die Teilmaschinen gesplittet. Somit kann die jeweilige Leistung der Teilmaschine auf 1/n-tel (n = Anzahl der Planetenräder bzw. der Teilmaschinen) im Vergleich zur Leistung einer zugeordneten einzelnen Elektromaschine aufgeteilt werden. Neben der stark vereinfachten Konstruktion ergibt sich daraus ein weiterer bemerkenswerter Vorteil: Da erfahrungsgemäß bei Hochdrehzahlantrieben hauptsächlich die Umfangsgeschwindigkeit mit einigen 100 m/s aus Festigkeitsgründen begrenzt ist, kann bei gleicher begrenzter Umfangsgeschwindigkeit der Teilrotoren in das gleiche Volumen deutlich mehr elektrische Leistung installiert werden. Splittet man beispielsweise einen Rotor in vier Teilrotoren auf, die die gleiche Rotor-Gesamtfläche haben, so haben die Teilrotoren den halben Durchmesser des ursprünglichen Rotors. Unterstellt man den gleichen spezifischen Schub pro Fläche im Luftspalt, so bedeutet der halbe Durchmesser bzw. der halbe Umfang des ursprünglichen Rotors den halben Schub pro Teilrotor. Multipliziert mit dem halben Radius des ursprünglichen Rotors liefert jeder Teilrotor somit ein Viertel des ursprünglichen Drehmoments, in Summe liefert die Aufspaltung in flächenneutrale Teilrotoren das gleiche Drehmoment, die gleiche Leistung wird also durch die gleiche Drehzahl der Teilrotoren wie ursprünglich möglich. Die gleiche Leistung ist daher beim vorliegenden System mit der halben Umfangsgeschwindigkeit erzielbar, und somit wird ein großer Vorteil bei der mechanischen Realisierung erhalten. Es gibt also im Prinzip noch eine Reserve, um die Drehzahl und damit die installierte Leistung zu verdoppeln, um auf die gleiche Umfangsgeschwindigkeit zu kommen. Vorteilhaft kann weiters die die mechanische Kopplung herbeiführende Getriebefunktion zur Darstellung eines Übersetzungsverhältnisses von Rotordrehzahl zu Getriebeabtriebsdrehzahl genutzt werden.

Im Allgemeinen betrifft die Erfindung auch Maschinensysteme, bei denen alle Teilmaschinen dieselbe Drehrichtung aufweisen. Besonders kompakte und effiziente Lösungen können erzielt werden, wenn das Maschinensystem mindestens vier Teilmaschinen aufweist, wobei eine Hälfte der jeweils benachbarten Teilmaschinen eine entgegengesetzte Drehrichtung aufweist und die andere Hälfte der jeweils benachbarten Teilmaschinen eine gleiche Drehrichtung aufweist wie die jeweilige Teilmaschine. Aufgrund der teils gleichen, teils entgegengesetzten Drehrichtung benachbarter Teilmaschinen können bei der Verschaltung von Spulen zu Strängen längere und kürzere magnetisch gut leitende Verbindungsschenkel magnetisch gekoppelt werden, sodass die Stränge gleiche magnetische Situationen vorfinden, wodurch ein gleichmäßigeres Drehmoment und ein weitgehend symmetrisches Drehspannungssystem erzielbar ist.

Gemäß einer beispielhaften Ausführungsform kann jede Teilmaschine mit genau zwei benachbarten Teilmaschinen elektromagnetisch verkoppelt sein. Diese beiden der Teilmaschine benachbarte Teilmaschinen laufen dabei in entgegengesetzte Richtung, sodass jede Teilmaschine einen gleichlaufenden und einen gegenlaufenden Nachbarn aufweist.

Weiters kann mindestens eine Teilmaschine mit einer benachbarten Teilmaschine, die die gleiche Drehrichtung aufweist, mit genau einem Schenkel elektromagnetisch verkoppelt sein. Als "Schenkel" wird hier das magnetisch gut leitende Verbindungsstück zwischen zwei benachbarten Rotoren bezeichnet. Beispielsweise kann genau ein Polschuh der einen Teilmaschine und genau ein Polschuh der anderen, benachbarten Teilmaschine durch den Schenkel gebildet ober mit dem Schenkel verbunden sein. Die Polschuhe entlang eines Rotorumfanges sind üblicherweise gleichartig entlang des Umfanges angeordnet. In weiteren Ausführungsformen können diese Polschuhe unterschiedlich entlang des Umfanges angeordnet sein und/oder unterschiedliche Öffnungswinkel in Bezug auf den Drehpunkt des Rotors aufweisen, wodurch geometrische Vorteile wie höhere Kompaktheit oder elektromagnetische Vorteile, wie optimierte Drehmomentbildung, gegeben sind.

Vorzugsweise ist auf jedem magnetisch gut leitenden Schenkel eine Spule vorgesehen, wobei die Spulen nach bekannten Methoden der Elektrotechnik zu Drehstromsystemen verschaltet werden. Natürlich können die Spulen auch aus mehreren Teilspulen bestehen, wodurch eine große Flexibilität bei der Verschaltung erreicht werden kann, um z.B. Redundanz bei Ausfall einer Teilspule etc. zu erreichen.

Darüber hinaus kann in diesem Zusammenhang mindestens eine Teilmaschine mit einer benachbarten Teilmaschine, die eine entgegengesetzte Drehrichtung aufweisen, mit genau zwei Schenkeln elektromagnetisch verkoppelt sein.

Außerdem können im Rahmen der vorliegenden Offenbarung mindestens zwei benachbarte Teilmaschinen, die die gleiche Drehrichtung aufweisen, Rotoren mit verschiedenen Polzahlen aufweisen. Die Polzahlen der beiden Teilmaschinen sind dabei vorzugsweise in einem Verhältnis u:g, wobei u eine positive ungerade ganze Zahl und g eine positive gerade ganze Zahl ist, oder im Verhältnis 1:n, wobei n eine positive ganze Zahl größer oder gleich 2 ist, vorzugsweise im Verhältnis 1:2.

Ferner können die Spulen von mindestens zwei benachbarten Teilmaschinen, vorzugsweise von allen mechanisch und elektromagnetisch verkoppelten Teilmaschinen, zu einem dreisträngigen Wicklungssystem verschaltet sein. Das offenbarte Maschinensystem kann eine drei-phasige Drehstrommaschine sein. Besonders vorteilhaft ist die im Zusammenhang mit abwechselnd einem oder zwei Schenkeln zwischen benachbarten Teilmaschinen. In diesem Fall umfassen die elektromagnetischen Verkopplungen mit den benachbarten Teilmaschinen jeweils höchstens zwei Stränge. Die insgesamt drei Stränge sind somit bei jeder Teilmaschine auf zwei (oder mehrere) verschiedene benachbarte Teilmaschinen aufgeteilt. Das ermöglicht eine besonders kompakte Konstruktion des Stators.

Weiters kann vorgesehen sein, dass ein Rotor mindestens einer der Teilmaschinen nur zweipolig oder nur vierpolig ist.

Die mechanische Verkopplung der Teilmaschinen kann beispielsweise durch eine Getriebefunktion definiert sein, die zugleich das Übersetzungsverhältnis von Rotordrehzahl zu Getriebeabtriebsdrehzahl definiert. Vorzugsweise sind die Teilmaschinen für betragsmäßig gleiche Drehzahlen mechanisch verkoppelt.

Die Teilmaschinen können gemäß einer bevorzugten Ausführungsform synchron laufende Rotoren mit Permanentmagneterregung, elektrischer Erregung und/oder Reluktanzcharakter sein. Andererseits können die Teilmaschinen auch asynchron laufende Rotoren in Form eines Kurzschlussläufers und/oder Schleifringläufers sein.

Die Ansteuerung des Spulensystems kann über leistungselektronische Stellglieder nach an sich bekannten Ansteuerverfahren für Drehstrommaschinen erfolgen; weiters ist es möglich, mittels Rechenmittel eine mittlere elektrische Rotorposition der Teilmaschinen über sensorlose Verfahren, auf Basis mathematischer Modelle, zu ermitteln. Als Beispiel sei AT 508 854 B erwähnt. Weiters werden mathematische Modelle in Schrödl, M. "Sensorless Control of A.C. machines", Fortschrittsbericht VDI, Reihe 21, Nr. 117 (VDI-Verlag Düsseldorf 1992) angegeben.

Die mechanische Verkopplung der Teilmaschinen kann in an sich bekannter Weise auch derart sein, dass die Ausführung einer resultierenden linearen Bewegung erzielt wird. Besonders vorteilhaft ist dies im Zusammenhang mit paarweise in gleiche Drehrichtung betriebenen Teilmaschinen, wenn z.B. beidseitig einer Zahnstange jeweils ein gleichlaufendes Maschinenpaar mit der Zahnstange mechanisch verkoppelt ist, wobei die bezüglich der Zahnstange gegenüberliegenden Maschinenpaare eine entgegengesetzte Drehrichtung aufweisen.

Für eine einfache Einstellung der resultierenden Flussverkettungen in den Spulen ist es auch von Vorteil, wenn die mittleren Winkellagen von mindestens zwei, vorzugsweise allen, Teilmaschinen im Betrieb relativ zueinander mechanisch veränderbar sind. Damit kann auch die Klemmenspannung beeinflusst und bei Bedarf bis nahe Null abgesenkt werden.

Das Maschinensystem kann eine Welle aufweisen, die ein Getriebeelement bzw. mehrere Getriebeelemente trägt, wobei das Getriebeelement bzw. die Getriebeelemente die Teilmaschinen mechanisch verkoppelt bzw. verkoppeln, wobei die Welle optional mit einem Differenzialgetriebe mechanisch verbunden ist; vorzugsweise ist dabei, um Platz zu sparen, die Welle als Hohlwelle ausgeführt.

Bei dem gegenständlichen elektrischen Maschinensystem der oben beschriebenen Art kann mindestens ein Teil der Spulen eines Stators gekühlt sein. Die Kühlung kann z.B. mit einer gekühlten Platte und/oder mit Kühlelementen zwischen bzw. möglichst nahe bei den Spulen und magnetisch gut leitenden Schenkeln erfolgen; es kann ein konvektiver Abtransport von Wärme aus den aktiven Elementen des Stators, z.B. mittels Kühlflüssigkeit, erzielt werden und eine verbesserte thermische Kopplung mit einer Kühleinheit außerhalb des Maschinensystems.

Mindestens ein Teil der spulentragenden Schenkel des Stators können ein magnetisch leitendes Material mit einer magnetischen Vorzugsrichtung aufweisen. Vorzugsweise weisen alle Schenkel oder alle Spulen tragende Teile des Stators ein solches Material auf oder bestehen aus einem solchen Material. Das Material kann ein Transformatorblech sein oder vergleichbare Eigenschaften aufweisen. Führt man die magnetisch leitenden Statorteile (insbesondere die Schenkel) so aus, dass sie weitgehend "gerade" Wege für die Flussführung ermöglichen, so können vorteilhafterweise kornorientierte Bleche mit geringen Verlusten eingesetzt werden.

Die Erfindung wird nachfolgend anhand von in der Zeichnung dargestellten Ausführungsbeispielen, auf die sie jedoch nicht beschränkt ist, noch weiter erläutert. Im Einzelnen zeigen in der Zeichnung:
Fig. 1 eine schematische Anordnung eines Maschinensystems mit vier Teilmaschinen;
Figuren 2A und 2B schematisch zum Vergleich ein Maschinensystem mit vier Teilmaschinen gemäß WO 2018/006109 A1 in Fig. 2A und ein Maschinensystem gemäß der gegenständlichen Offenbarung in Fig. 2B;
Fig. 3 ein Beispiel für eine mechanische Kopplung, hier mit ausschließlich außenverzahnten Zahnrädern, mit einem Zentralrad und jeweils einem Umkehrrad für eine Hälfte der Teilmaschinen;
Fig. 4 ein weiteres Beispiel für eine mechanische Kopplung, hier mit einem innen- und außenverzahnten Zahnkranz;
Fig. 5 noch ein Beispiel für eine mechanische Kopplung vergleichbar mit Fig. 3, wobei anstelle der beiden Umkehrräder ein gemeinsames Zwischenrad, d.h. das mehr als einer Teilmaschine zugeordnet ist, vorgesehen ist;
Fig. 6A-C schematisch einen Ausschnitt mit zwei benachbarten Teilmaschinen eines elektrischen Maschinensystems, wobei die Teilmaschinen Rotoren mit verschiedenen Polzahlen aufweisen; und
Fig. 7 schematisch eine mechanische vor Kopplung von vier Teilmaschinen zur Ausführung einer linearen Bewegung.

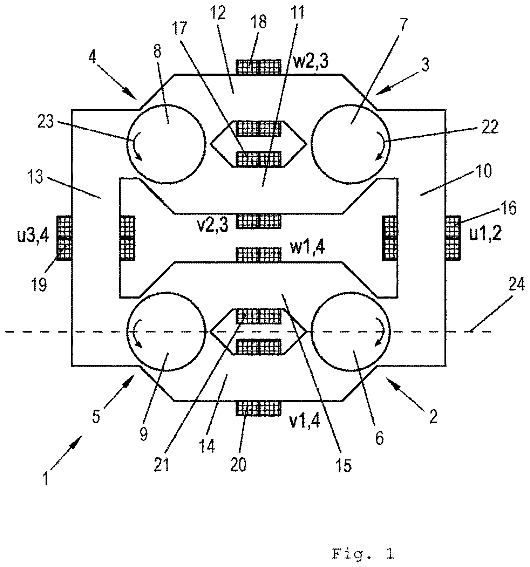

In Fig. 1 ist ein elektrisches Maschinensystem 1 mit vier mechanisch und elektromagnetisch verkoppelten Teilmaschinen 2-5 gezeigt. Die Teilmaschinen 2-5 weisen jeweils einen permanentmagneterregten Rotor 6-9 auf. Zwischen den benachbarten Rotoren 6-9 sind jeweils entweder einer oder zwei Schenkel 10-15 angeordnet. Die Schenkel 10-15 sind in einer stark vereinfachten Struktur, ohne Klappen und ohne Spalte, dargestellt. Die Schenkel 10-15 weisen jeweils eine Spule, d. h. insgesamt sechs Spulen 16-21, auf (in Fig. 1 sind die einzelnen Spulen 16-21 beispielsweise jeweils aus zwei Teilspulen zusammengesetzt - es können natürlich auch Einzelspulen, die nicht in Teilspulen aufgetrennt sind, verwendet werden), wobei jeweils zwei Spulen 16-21 demselben Strang (entsprechend einer Phase) zugeordnet sind. Beispielsweise sind die Spulen 16, 19 einem ersten Strang ("u"), die Spulen 17, 20 einem zweiten Strang ("v") und die Spulen 18, 21 einem dritten Strang ("w") zugeordnet. Im Fall von vier gleichen Rotoren 6-9 weisen die beiden mit dem Schenkel 10 elektromagnetisch verkoppelten Teilmaschinen 2, 3 eine erste Drehrichtung 22 auf. Die beiden mit dem Schenkel 13 elektromagnetisch verkoppelten Teilmaschinen 4, 5 weisen eine der ersten Drehrichtung 22 entgegengesetzte zweite Drehrichtung 23 auf. Dementsprechend weisen die beiden mit zwei Schenkeln 11, 12 elektromagnetisch verkoppelt Teilmaschinen 3, 4 entgegengesetzte Drehrichtungen 22, 23 auf; dasselbe gilt für die mit den beiden Schenkeln 14, 15 elektromagnetisch verkoppelten Teilmaschinen 2, 5.

Die dreisträngige Anordnung gemäß Fig. 1 hat den Vorteil, dass übliche dreisträngige Umrichter zur Ansteuerung verwendet werden können. Die beiden jeweils zu einem Strang gehörigen Spulen 16-21, z.B. u1 bis u4 etc., können wahlweise in Serie oder parallel geschaltet werden, da sie ständig die gleichen Flussverkettungen tragen. Sie können aber auch mit getrennten Umrichtern (nicht dargestellt) angesteuert werden, um beispielsweise eine Redundanz oder eine erhöhte Leistung zu ermöglichen. Die Steuerung der Umrichter erfolgt vorteilhafterweise gemäß an sich bekannten Steuerverfahren für Drehstrommaschinen, etwa der feldorientierten Regelung, wobei sich hier, da an sich bekannt, eine genauere Beschreibung erübrigen kann. Dabei kann häufig auf Drehgeber verzichtet werden, wenn sog. "sensorlose" Verfahren, wie das an sich bekannte "INFORM^{®}"-Verfahren oder EMK-Verfahren, eingesetzt werden. Für den Umrichter erscheint dann das "Multimotorsystem" im Klemmenverhalten wie eine einzige elektrische Maschine.

Die Spulen 17, 20, 18, 21 der Phase v1,4 und v2,3 sowie w1,4 und w2,3 sind im Wesentlichen gleich lang, weil sich bei jeder Phase eine Spule an der Außenseite und eine - beim anderen Teilmaschinenpaar - an der Innenseite der Anordnung befindet. D.h. die Phasen sind bei einem Teilmaschinenpaar gegenüber einer Anordnung mit vier, abwechselnd gegenläufig vorgesehenen Drehrichtungen gespiegelt um die gestrichelte Spiegelachse 24.

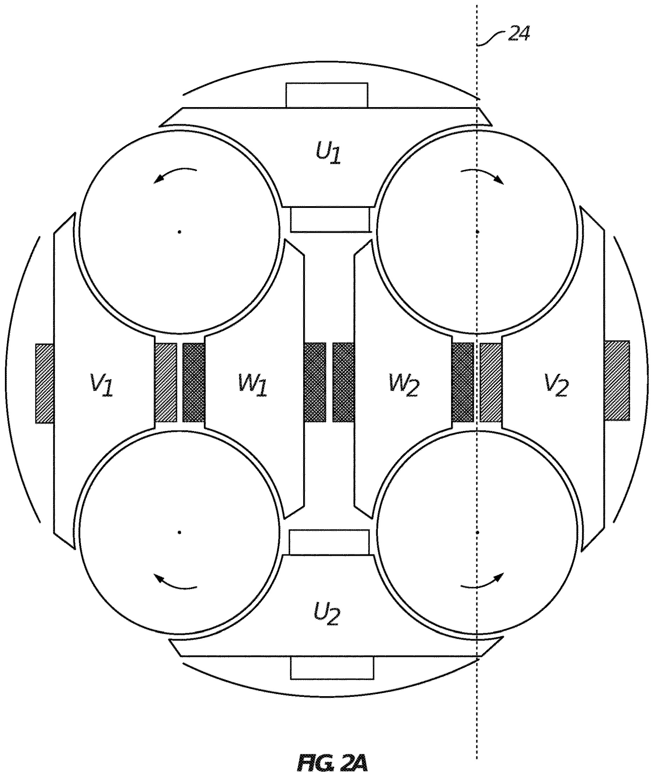

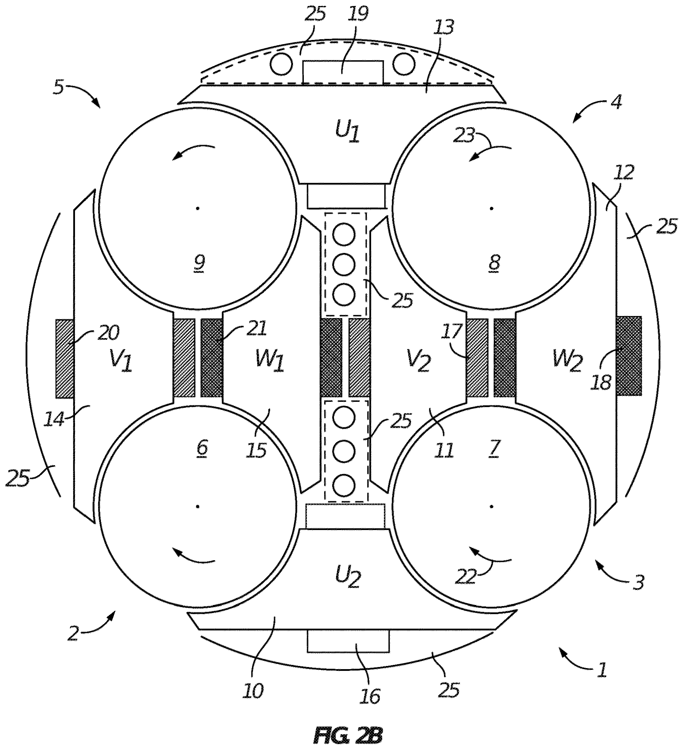

In Fig. 2A ist eine entsprechende Spiegelachse bei einem nicht erfindungsgemäßen Maschinensystem eingezeichnet: eine Spiegelung des betreffenden Teilmaschinenpaars um diese Achse führt zu dem erfindungsgemäßen Maschinensystem gemäß Fig. 2B. Dadurch können mehrere Vorteile erreicht werden: Einerseits ermöglicht eine Aufteilung des Rotorumfanges in unterschiedliche Winkelabschnitte für die Überleitung des magnetischen Flusses in die magnetisch leitenden Statorteile durch die dadurch möglichen geometrischen Freiheitsgrade eine sehr kompakte Konstruktion.

Dadurch wird wesentlich weniger magnetisch leitendes Material im Vergleich zu einer symmetrischen Aufteilung des Rotorumfanges auf die Statorstränge, wie sie aus dem Stand der Technik bekannt ist (z.B. DE 10 2013 213 847 A1), benötigt. Zusätzlich kann durch diese ungleichmäßige Anordnung eine weitgehend "gerade" magnetische Flussführung innerhalb der magnetisch gut leitenden Statorteile (d. h. im Wesentlichen den Schenkeln 10-15) erzielt werden, wodurch diese mit magnetischer Vorzugsrichtung analog Transformatorblech ausgeführt werden können, welche bekannterweise bessere Eigenschaften bezüglich Verlusten, magnetischem Spannungsabfall und zulässiger Flussdichte in der Vorzugsrichtung aufweisen. Schließlich ermöglicht eine Anordnung der magnetisch leitenden Statorteile innerhalb des gemeinsamen Umkreises um die um einen Luftspalt erweiterten Rotoren 6-9 eine sehr kompakte Gehäusekonstruktion und geringes Gewicht der Statorteile.

Bei dem in Fig. 2B gezeigten Beispiel werden Wärme abführende, vorzugsweise flüssige Medien verwendet und Kühleinheiten 25 in unmittelbarer Nähe von zumindest einer der Spulengrenzflächen, welche gebildet werden aus den Abschnitten "Spulenköpfe", "Spulenrücken", "Spulenseiten", "Spuleninnenflächen" angeordnet. Dadurch kann eine enge thermische Kopplung zwischen den wärmeproduzierenden Spulen 16-21 (und auch den magnetischen Fluss führenden, ebenfalls Wärme produzierenden Statorteilen) und den Kühleinheiten 25 geschaffen werden.

Die mechanische Kopplung der Teilmaschinen 2-5 kann in gleicher Weise mit formschlüssigen Verbindungen, vorzugsweise Zahnrädern, (alternativ Zahnriemen, Ketten etc.) erfolgen. Anzumerken ist, dass bei Rotoren, bei denen die Funktion unabhängig vom Rotorwinkel ist, wie etwa bei Asynchronmaschinen, auch eine reibschlüssige Verbindung zulässig ist.

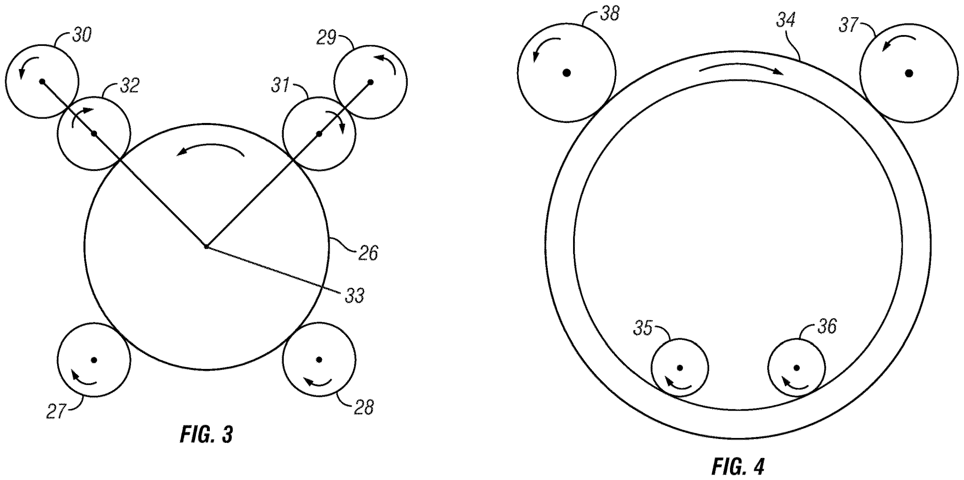

In Fig. 3 ist ein Beispiel mit ausschließlich außenverzahnten Zahnrädern 26-32 angegeben. Die Zahnräder 27-30 sind jeweils den Teilmaschinen 2-5 zugeordnet, d. h mit den Wellen der Rotoren 6-9 verbunden. Die beiden Zwischenzahnräder 31, 32 bewirken eine Drehrichtungsumkehr der benachbarten Teilmaschinen 2, 5 bzw. 3, 4.

Die Zahnräder 26-32 können zur Realisierung eines Übersetzungsverhältnisses auf die Abtriebswelle 33 (in Fig. 4 im Zentrum des ringförmigen Zahnrades sitzend) verwendet werden.

Damit kann eine sehr kurze Getriebeeinheit realisiert werden.

In Fig. 4 wird eine mechanische Kopplung vierer Teilmaschinen mit einem Zahnkranz erzielt. In dieser Ausgestaltung wird die Drehrichtungsumkehr der benachbarten Rotoren ohne Zwischenrad, aber mit einer Außen- und einer Innenverzahnung realisiert. Die beiden Verzahnungen können entweder durch eine Kombination von innenverzahntem Außenzahnradkranz mit einem außenverzahnten Innenrad oder alternativ durch einen beidseitig verzahnten Zahnring 34 (siehe Fig. 4) realisiert werden. Der Vorteil ist, dass auf Drehrichtung umkehrende Zwischenräder (einschließlich deren Lagerung und zusätzliche Kontaktstelle zur Drehmomenteinleitung ins zentrale Rad) verzichtet werden kann. Aufgrund der unterschiedlichen Radien der Außenverzahnung und der Innenverzahnung des Zahnrings 34 sind die den Teilmaschinen 2-5 zugeordneten Zahnräder 35-38 mit unterschiedlichen Radien dargestellt, wobei die Darstellung nur schematisch ist und die Verhältnisse nicht maßstabgetreu sind.

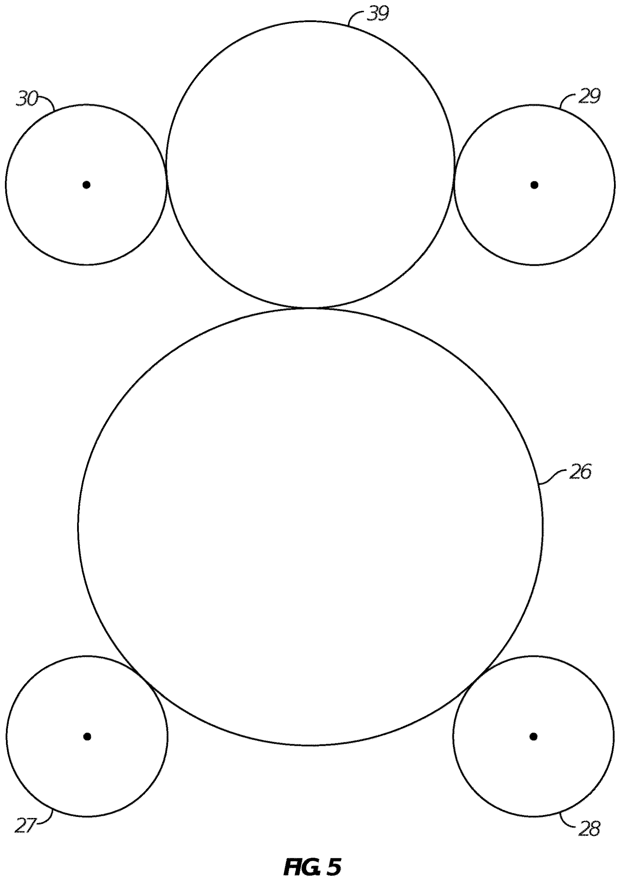

Fig. 5 ist sehr ähnlich zu Fig. 3, wobei die beiden Zwischenzahnräder 31, 32 durch ein gemeinsames Zwischenrad 39 ersetzt wurden. In dieser Ausgestaltung wird die Drehrichtungsumkehr von Rotoren durch ein Zwischenrad 39 erzeugt, wodurch nur ein einziges die Drehmomente summierendes zentrales (Zahn-)Rad 26 nötig ist. Dadurch kann auf das innen verzahnte Rad der einen Drehrichtungsgruppe verzichtet werden, was fertigungstechnisch einen gewissen Aufwand bedeutet. Auch hier ist die Darstellung grob schematisch zu verstehen; der Fachmann wird die Radien der Zahnräder 27-30 sowie 39 an die Gegebenheiten und insbesondere an die erwarteten Verhältnisse der Umlaufgeschwindigkeiten der Rotoren 2-5 anpassen.

In einer besonderen Ausgestaltung ist der Relativwinkel zwischen den beiden gegenläufigen Drehrichtungsgruppen (d.h. mit Rotoren, die in gegensätzliche Richtungen rotieren) durch eine geeignete Mechanik veränderbar. Beispielsweise können die fest verbundenen Zahnräder 29, 30 von Fig. 3-5 eine (an sich bekannte) Schrägverzahnung aufweisen und durch eine Mechanik, die eine axiale Verschiebung der Zahnräder 29, 30 gegenüber den eingreifenden (Planeten-)Rädern 31, 32, 34, 39 ermöglicht, axial bewegt werden. Durch die axiale Verschiebung kommt es zufolge der Schrägverzahnung zu einer Verdrehung des Relativwinkels zwischen den beiden Drehrichtungsgruppen. Damit werden die zwei Drehrichtungsgruppen zueinander verdreht, und es kann auf diese Weise etwa im Falle von permanentmagneterregten Rotoren eine geometrisch bedingte Feldschwächung ohne eine technisch übliche feldschwächende Statorstromkomponente realisiert werden. Damit kann beispielsweise ein Permanentmagnet-Synchronantrieb mit beliebiger Spannung während der Rotation, also auch einer Spannung Null, erzielt werden. Mit dieser axialen Bewegungsmöglichkeit können weiters auch andere Funktionen, wie z.B. eine Parkbremsfunktion, eine Sicherheitsfunktion "Klemmspannung Null" etc., zusätzlich realisiert werden. Durch die axiale Verschiebung ergibt sich der Vorteil, dass die Flussverkettungen in den Spulen durch die Verdrehung sich zumindest teilweise auslöschen können und damit die induzierte Spannung bei gleicher Drehzahl reduziert werden kann, um bei geeignet großer Verdrehung etwa Null zu werden. Dadurch kann einerseits alternativ zu einer elektrischen Feldschwächung auch eine mechanische Feldschwächung realisiert werden, weiters kann dadurch ein sehr sicherer Zustand der rotierenden Maschine, etwa im Falle eines Umrichterfehlers, erreicht werden.

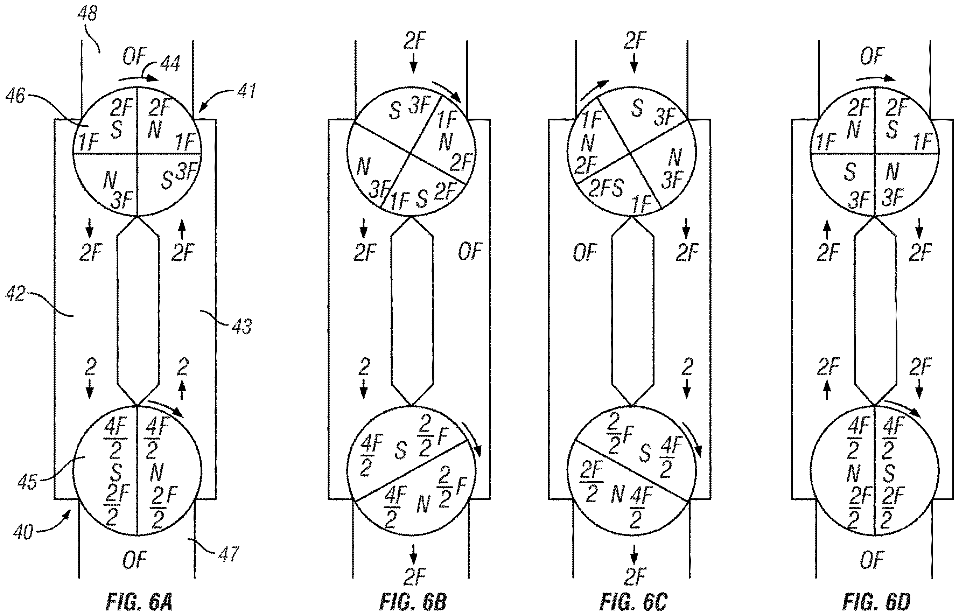

In den Figuren 6A-D ist derselbe Ausschnitt eines elektrischen Maschinensystems 1 bei unterschiedlichen Phasenlagen gezeigt. Der Ausschnitt zeigt zwei benachbarte Teilmaschinen 40, 41, die elektromagnetisch mit genau zwei Schenkeln 42, 43 verkoppelt sind und die gleiche Drehrichtung 44 aufweisen. Dies wird dadurch ermöglicht, dass die Rotoren 45, 46 verschiedene Poolzahlen aufweisen. Der erste Rotor 45 ist zweipolig und der zweite Rotor 46 ist vierpolig. Die Pole sind in den Figuren Buchstaben "N" und "S" bezeichnet. Zum Verständnis der elektromagnetischen Verkopplung sind schematisch die magnetischen Flüsse mit Pfeilen und ganzzahligen magnetischen Flusseinheiten F eingezeichnet. Die beiden dargestellten Teilmaschinen 40, 41 sind jeweils mit weiteren, nicht dargestellten Teilmaschinen über die Schenkel 47, 48 elektromagnetisch verkoppelt.

Wie in den Figuren 6A-D ersichtlich, dreht sich der zweipolige Rotor 45 doppelt so schnell wie der vierpolige Rotor 46. Andererseits ist der zweipolige Rotor 45 nur halb so stark magnetischer wie der vierpolige Rotor 46 insgesamt (d.h. wenn man alle Flusseinheiten zusammenzählt). Zwischen den einzelnen Figuren 6A-D dreht sich der zweipolige Rotor 45 um 60° im Uhrzeigersinn, während sich der vierpolige Rotor 46 in dieselbe Drehrichtung 44 nur um 30° dreht. Somit zeigen die Figuren 6A-D eine Drehung der Rotoren 45, 46 um 180° bzw. 90°. Die in den Schenkeln 42, 43 eingezeichneten Flusseinheiten ergeben sich aus den an die Polkappen angrenzenden Pole der Rotoren 45, 46, wobei in vielen Fällen die Feldlinien diese Pole teilweise über den Luftspalt geschlossen sind. Im Bild einer umlaufenden Wanderwelle im Luftspalt lässt sich die gleiche Drehrichtung der beiden Rotoren als gegenläufige Bewegung der ersten und zweiten Harmonischen des Drehfelds verstehen.

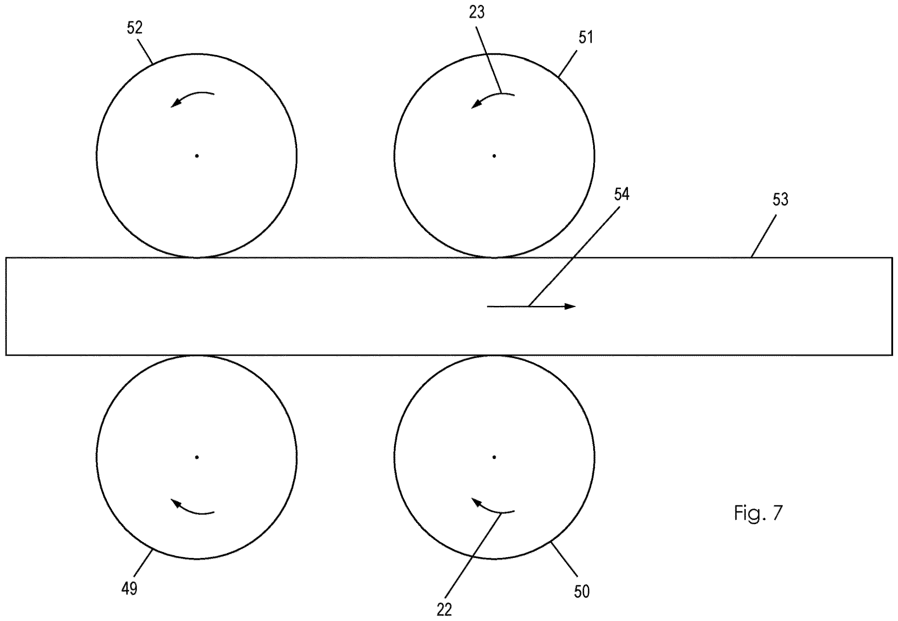

In Fig. 7 ist eine mechanische Verkopplung mit vier Zahnrädern 49-52 gezeigt, die z.B. den Teilmaschinen 2-5 gemäß Fig. 2B zugeordnet sind. Die Zahnräder 49-52 sind mit der Zahnstange 53 untereinander mechanisch verkoppelt. Die Zahnstange 53 führt somit Betrieb der Teilmaschinen die dargestellten Drehrichtungen 22, 23 (vergleiche Fig. 2B) eine lineare Bewegung in die Translationsrichtung 54 aus.

## Patentansprüche

1. Elektrisches Maschinensystem (1) mit einer geradzahligen Anzahl mechanisch und elektromagnetisch verkoppelter und Drehfelder erzeugender Teilmaschinen (2-5), die gemeinsame magnetische Abschnitte und gemeinsame Spulen (16-21) aufweisen,
wobei das Maschinensystem (1) mindestens vier Teilmaschinen (2-5) aufweist,
wobei jede Teilmaschine mit zwei benachbarten Teilmaschinen über magnetisch leitende Schenkel (10-15) elektromagnetisch verkoppelt ist,
wobei die Teilmaschinen (2-5) mechanisch über ein Getriebe verkoppelt sind,
**dadurch gekennzeichnet, dass** mindestens zwei benachbarte Teilmaschinen (2, 3) eine gleiche Drehrichtung (22) aufweisen.

2. Elektrisches Maschinensystem (1) nach Anspruch 1, **dadurch gekennzeichnet, dass** eine Hälfte der jeweils benachbarten Teilmaschinen eine entgegengesetzte Drehrichtung aufweist und die andere Hälfte der jeweils benachbarten Teilmaschinen eine gleiche Drehrichtung aufweist wie die jeweilige Teilmaschine.

3. Elektrisches Maschinensystem (1) nach Anspruch 1 oder 2, **dadurch gekennzeichnet, dass** mindestens eine Teilmaschine (2) mit einer benachbarten Teilmaschine (3), die die gleiche Drehrichtung (22) aufweist, mit genau einem Schenkel (10) elektromagnetisch verkoppelt ist.

4. Elektrisches Maschinensystem (1) nach Anspruch 2 und Anspruch 3, **dadurch gekennzeichnet, dass** mindestens eine Teilmaschine (3) mit einer benachbarten Teilmaschine (4), die eine entgegengesetzte Drehrichtung (23) aufweist, mit genau zwei Schenkeln (11, 12) elektromagnetisch verkoppelt ist.

5. Elektrisches Maschinensystem (1) nach einem der Ansprüche 1 bis 4, **dadurch gekennzeichnet, dass** mindestens zwei benachbarte Teilmaschinen (40, 41), die die gleiche Drehrichtung (44) aufweisen, Rotoren (45, 46) mit verschiedenen Polzahlen aufweisen.

6. Elektrisches Maschinensystem (1) nach einem der Ansprüche 1 bis 5, **dadurch gekennzeichnet, dass** die Spulen (16-21) von mindestens zwei benachbarten Teilmaschinen (2-5), vorzugsweise von allen mechanisch und elektromagnetisch verkoppelten Teilmaschinen, zu einem dreisträngigen Wicklungssystem verschaltet sind.

7. Elektrisches Maschinensystem (1) nach einem der vorstehenden Ansprüche, **dadurch gekennzeichnet, dass** ein Rotor (6) mindestens einer der Teilmaschinen (2) nur zweipolig oder nur vierpolig ist.

8. Elektrisches Maschinensystem (1) nach einem der vorstehenden Ansprüche, **dadurch gekennzeichnet, dass** die mechanische Verkopplung der Teilmaschinen (2-5) durch eine Getriebefunktion definiert ist, die zugleich das Übersetzungsverhältnis von Rotordrehzahl zu Getriebeabtriebsdrehzahl definiert.

9. Elektrisches Maschinensystem (1) nach einem der vorstehenden Ansprüche, **dadurch gekennzeichnet, dass** die mechanische Verkopplung der Teilmaschinen (2-5) zur Ausführung einer linearen Bewegung eingerichtet ist.

10. Elektrisches Maschinensystem (1) nach einem der vorstehenden Ansprüche, **dadurch gekennzeichnet, dass** die mittleren Winkellagen von mindestens zwei, vorzugsweise allen, Teilmaschinen (2-5) im Betrieb zueinander mechanisch veränderbar sind.

11. Elektrisches Maschinensystem (1) nach einem der vorstehenden Ansprüche, **dadurch gekennzeichnet, dass** mindestens ein Teil der Spulen (16-21) des Stators gekühlt sind.

12. Elektrisches Maschinensystem (1) nach einem der vorstehenden Ansprüche, **dadurch gekennzeichnet, dass** mindestens ein Teil der spulentragenden Schenkel (10-15) des Stators ein magnetisch leitendes Material mit einer magnetischen Vorzugsrichtung aufweisen.

## Claims

1. Electrical machine system (1) having an even number of mechanically and electromagnetically coupled sub-machines (2-5) generating rotating fields, which sub-machines comprise common magnetic portions and common coils (16-21),
the machine system (1) comprising at least four sub-machines (2-5),
each sub-machine being electromagnetically coupled to two adjacent sub-machines via magnetically conductive legs (10-15),
the sub-machines (2-5) being mechanically coupled via a transmission,
**characterised in that** at least two adjacent sub-machines (2, 3) have the same direction of rotation (22).

2. Electrical machine system (1) according to claim 1,
**characterised in that** one half of the respectively adjacent sub-machines has an opposite direction of rotation and the other half of the respectively adjacent sub-machines has the same direction of rotation as the relevant sub-machine.

3. Electrical machine system (1) according to either claim 1 or claim 2, **characterised in that** at least one sub-machine (2) is electromagnetically coupled to an adjacent sub-machine (3) having the same direction of rotation (22) by means of exactly one leg (10).

4. Electrical machine system (1) according to claim 2 and claim 3, **characterised in that** at least one sub-machine (3) is electromagnetically coupled to an adjacent sub-machine (4) having an opposite direction of rotation (23) by means of exactly two legs (11, 12).

5. Electrical machine system (1) according to any of claims 1 to 4, **characterised in that** at least two adjacent sub-machines (40, 41) having the same direction of rotation (44) comprise rotors (45, 46) having different numbers of poles.

6. Electrical machine system (1) according to any of claims 1 to 5, **characterised in that** the coils (16-21) of at least two adjacent sub-machines (2-5), preferably of all mechanically and electromagnetically coupled sub-machines, are connected to form a three-phase winding system.

7. Electrical machine system (1) according to any of the preceding claims, **characterised in that** a rotor (6) of at least one of the sub-machines (2) has only two poles or only four poles.

8. Electrical machine system (1) according to any of the preceding claims, **characterised in that** the mechanical coupling of the sub-machines (2-5) is defined by a transmission function which simultaneously defines the transmission ratio of rotor speed to transmission output speed.

9. Electrical machine system (1) according to any of the preceding claims, **characterised in that** the mechanical coupling of the sub-machines (2-5) is designed to carry out a linear movement.

10. Electrical machine system (1) according to any of the preceding claims, **characterised in that** the mean angular positions of at least two, preferably all, sub-machines (2-5) can be mechanically changed relative to one another during operation.

11. Electrical machine system (1) according to any of the preceding claims, **characterised in that** at least some of the coils (16-21) of the stator are cooled.

12. Electrical machine system (1) according to any of the preceding claims, **characterised in that** at least some of the coil-carrying legs (10-15) of the stator comprise a magnetically conductive material having a preferred magnetic direction.

## Revendications

1. Système de machines électrique (1) avec un nombre pair de machines partielles (2 - 5) accouplées mécaniquement et électromagnétiquement et générant des champs rotatifs, qui comprennent des parties magnétiques communes et des bobines communes (16 - 21), dans lequel le système de machines (1) comprend au moins quatre machines partielles (2 - 5),
dans lequel chaque machine partielle est accouplée électromagnétiquement avec deux machines partielles adjacentes par l'intermédiaire de branches magnétiquement conductrices (10 - 15),
dans lequel les machines partielles (2 - 5) sont accouplées mécaniquement par l'intermédiaire d'une transmission,
**caractérisé en ce qu'**au moins deux machines partielles adjacentes (2, 3) présentent le même sens de rotation (22).

2. Système de machines électrique (1) selon la revendication 1, **caractérisé en ce qu'**une moitié des machines partielles adjacentes entre elles présente un sens de rotation opposé et l'autre moitié des machines partielles adjacentes entre elles présentent le même sens de rotation qui la machine partielle respective.

3. Système de machines électrique (1) selon la revendication 1 ou 2, **caractérisé en ce qu'**au moins une machine partielle (2) est accouplée électromagnétiquement avec une machine partielle (3) adjacente, qui présente le même sens de rotation (22), avec exactement une branche (10).

4. Système de machines électrique (1) selon la revendication 2 et la revendication 3, **caractérisé en ce qu'**au moins une machine partielle (3) est accouplée électromagnétiquement avec une machine partielle (4) adjacente, qui présente un sens de rotation opposé (23), avec exactement deux branches (11, 12).

5. Système de machines électrique (1) selon l'une des revendications 1 à 4, **caractérisé en ce qu'**au moins deux machines partielles (40, 41) adjacentes, qui présentent le même sens de rotation (44), comprennent des rotors (45, 46) avec des nombres de pôles différents.

6. Système de machines électrique (1) selon l'une des revendications 1 à 5, **caractérisé en ce que** les bobines (16 - 21) d'au moins deux machines partielles (2 - 5) adjacentes, de préférence de toutes les machines partielles accouplées mécaniquement et électromagnétiquement, sont branchées en un système de bobinage à trois brins.

7. Système de machines électrique (1) selon l'une des revendications précédentes, **caractérisé en ce qu'**un rotor (6) d'au moins une des machines partielles (2) est seulement bipolaire ou seulement quadripolaire.

8. Système de machines électrique (1) selon l'une des revendications précédentes, **caractérisé en ce que** l'accouplement mécanique des machines partielles (2 - 5) est défini par une fonction de transmission qui définit en même temps le rapport de démultiplication entre la vitesse de rotation du rotor et la vitesse de rotation de sortie de la transmission.

9. Système de machines électrique (1) selon l'une des revendications précédentes, **caractérisé en ce que** l'accouplement mécanique des machines partielles (2 - 5) est conçu pour l'exécution d'un mouvement linéaire.

10. Système de machines électrique (1) selon l'une des revendications précédentes, **caractérisé en ce que** les positions angulaires moyennes d'au moins deux, de préférence de toutes les machines partielles (2 - 5) entre elles pendant le fonctionnement peuvent être modifiées mécaniquement.

11. Système de machines électrique (1) selon l'une des revendications précédentes, **caractérisé en ce qu'**au moins une partie des bobines (16 - 21) du stator sont refroidies.

12. Système de machines électrique (1) selon l'une des revendications précédentes, **caractérisé en ce qu'**au moins une partie des branches portant des bobines (10 - 15) du stator comprennent un matériau magnétiquement conducteur avec une orientation magnétique préférentielle.
